Europäisches Patentamt

European Patent Office

Office européen des brevets

(11) Veröffentlichungsnummer: **0 345 561**
**A2**

(12) # EUROPÄISCHE PATENTANMELDUNG

(21) Anmeldenummer: **89109512.7**

(22) Anmeldetag: **26.05.89**

(51) Int. Cl.4: **F16F 9/32 , B23P 15/10**

(30) Priorität: **04.06.88 DE 8807324 U**
**11.11.88 DE 8814123 U**

(43) Veröffentlichungstag der Anmeldung:
**13.12.89 Patentblatt 89/50**

(84) Benannte Vertragsstaaten:
**DE ES FR GB IT SE**

(71) Anmelder: **Fietz, Manfred**
**Müllersbaum 40**
**D-5093 Burscheid(DE)**

(72) Erfinder: **Fietz, Manfred**
**Müllersbaum 40**
**D-5093 Burscheid(DE)**

(74) Vertreter: **Paul, Dieter-Alfred, Dipl.-Ing.**
**Fichtestrasse 18**
**D-4040 Neuss 1(DE)**

(54) **Teleskopierende Vorrichtung sowie Verfahren zu deren Herstellung.**

(57) Eine teleskopierende Vorrichtung, insbesondere Stoßdämpfer weist ein Zylinderrohr und einen darin axial verschieblichen Kolben auf, auf dessen Umfangsfläche ein Gleitring aus einem PTFE-Material (Polytetrafluoräthylen) angeordnet ist, der an Absätzen zur Verhinderung einer Axialbewegung anliegt und mit der Innenwandung des Zylinderrohrs in Berührung steht. Damit trotz wesentlich geringerer Herstellungskosten über den Umfang gleichbleibende Dichtheit und Gleitverhältnisse gewährleistet sind, ist der Gleitring (7, 19) endlos ausgebildet und umfaßt den Kolben (1, 11) mit radialer Schrumpfspannung.

Fig. 1

## Teleskopierende Vorrichtung sowie Verfahren zu deren Herstellung

Die Erfindung betrifft eine teleskopierende Vorrichtung, insbesondere einen Stoßdämpfer, mit einem Zylinderrohr und einem darin axial verschieblichen Kolben, auf dessen Umfangsfläche ein Gleitring aus einem PTFE-Material angeordnet ist, der an Absätzen zur Verhinderung einer Axialbewegung anliegt und mit der Innenwandung des Zylinderrohrs in Berührung steht. Die Erfindung bezieht sich ferner auf ein Verfahren zur Herstellung einer teleskopierenden Vorrichtung, bei dem ein Gleitring aus PTFE geformt und um den Kolben unter Anlage an Absätzen gelegt wird.

Aus einem Zylinderrohr und einem Kolben bestehende Vorrichtungen werden in der Hydraulik und Pneumatik in vielfältigen Ausführungsformen eingesetzt. In der Ausführung als Teleskopzylinder mit einer an dem Kolben befestigten und aus dem Zylinderrohr herausragenden Kolbenstange werden solche Vorrichtungen insbesondere als Dämpfer oder als hydraulisch bzw. pneumatisch betätigte Druckzylinder eingesetzt. Die Kolben solcher Teleskopzylinder werden häufig an ihren Umfangsflächen mit Gleitringen versehen, über die sich jeweils der Kolben an der Innenwand des Zylinderrohrs abstützen kann. Die Gleitringe haben gleichzeitig Dichtfunktion.

Als besonders geeignetes Material für solche Gleitringe hat sich Polytetrafluoräthylen - abgekürzt PTFE - erwiesen, da es chemisch sehr beständig ist und zudem niedrige Gleitwerte mit nur sehr geringem Stick-Slip-Effekt hat. Dabei sind unter PTFE-Materialien nicht nur solche zu verstehen, die aus reinem PTFE bestehen, sondern auch modifiziertes PTFE, das verschiedene Beimengungen enthält, wie insbesondere Kohle oder Metalle. Die Beimengungen können vor allem bei Metallen über 50% liegen. Gleichwohl wird auch in solchen Fällen von einem modifizierten PTFE-Material gesprochen.

Bei dem bekannten Teleskopzylinder der eingangs genannten Art weist der Kolben auf seiner Umfangsfläche eine umlaufende, breite Ringnut auf, in die ein endlicher Streifen aus PTFE-Material eingelegt wird. Seine Dicke ist im Verhältnis zur Tiefe der Ringnut so bemessen, daß der aus dem Streifen gebildete Gleitring über die Umfangsfläche des Kolbens vorsteht. An der Stoßstelle überlappen sich die Stirnflächen stufenförmig.

Aufgrund der Tatsache, daß bisher verwendete Gleitringe endlich ausgebildet sind, treten an den einander zugewandten Stirnseiten zwangsläufig Undichtigkeiten auf, die zudem je nach Temperatur und Toleranz erheblich voneinander abweichen. Außerdem haben die Gleitringe eine gewisse Lose innerhalb der Nut, die ebenfalls eine Ursache für nicht reproduzierbare Dichtverhältnisse ist.

Der Erfindung liegt die Aufgabe zugrunde, bei einer Vorrichtung der eingangs genannten Art, die Kombination aus Kolben und Gleitring so zu gestalten, daß trotz wesentlich geringerer Herstellungskosten über den Umfang gleichbleibende Dichtheit und Gleitverhältnisse gewährleistet sind, sowie ein Verfahren zur Herstellung dieser Vorrichtung bereitzustellen.

Diese Aufgabe wird erfindungsgemäß dadurch gelöst, daß der Gleitring endlos ausgebildet ist und den Kolben mit radialer Schrumpfspannung umfaßt. Auf Grund seiner endlosen Ausbildung zeichnet sich die erfindungsgemäße Vorrichtung durch über den Umfang gleichbleibende Dicht- und Gleitverhältnisse aus. Die radial nach innen gerichtete Schrumpfspannung sorgt im übrigen für einen festen Halt des Gleitrings.

Der erfindungsgemäße Grundgedanke kann in zwei Ausführungsformen konkretisiert werden. Bei einer der beiden Ausführungsformen werden die Absätze, an denen der Gleitring zwecks Verhinderung einer Axialbewegung anliegt, von wenigstens einem ringförmigen Vorsprung gebildet, den der Gleitring formschlüssig umfaßt. Diese Ausführungsform hat insbesondere bei einer Herstellung des Kolbens aus Sintermetall den Vorteil, daß der Kolben keiner spanabhebenden Nachbearbeitung bedarf, da der Vorsprung schon bei der Formgebung des Kolbens vorgesehen werden kann. Dies ist beispielsweise bei Ringnuten, in denen Gleitringe eingelegt werden, nicht möglich. Dementsprechend sind die Herstellungskosten gering.

In weiterer Ausgestaltung dieser Ausführungsform ist vorgesehen, daß der Vorsprung als zylindrischer Kolbenabschnitt ausgebildet ist und der Gleitring U-Form mit nach innen gerichteten Randstegen aufweist. Diese Ausführungsform hat sich als herstellungstechnisch besonders einfach erwiesen. Die Dicke des Gleitrings kann den jeweiligen Verhältnissen angepaßt werden. Bei Dämpfern hat sich eine Dicke von 0,5 bis 1 mm bewährt. Dabei sollte der ringförmige Vorsprung mindestens 0,8 mm vorstehen.

Alternativ dazu können die Absätze auch als Teil einer Nut ausgebildet sein, in die der Gleitring eingepaßt ist. Auch diese Ausführungsform zeichnet sich durch geringe Herstellungskosten aus, weil der Gleitring relativ einfach anzufertigen ist. Außerdem hat der Gleitring bei dieser Ausführungsform einen besonders guten Halt auf dem Kolben und sichert somit die Dichtheit auch in schwierigen Einsatzfällen. Dabei kann der Umfang des Gleitrings so genau bestimmt werden, daß damit sogar Fertigungstoleranzen des Zylinderrohrs und/oder der Nut im Kolben ausgeglichen werden können.

Das erfindungsgemäße Verfahren ist dadurch gekennzeichnet, daß ein endloser Gleitring geformt wird, dessen Innendurchmesser zumindest in einem Teilbereich kleiner ist als die zugehörige Anlageringfläche am Kolben, daß der Gleitring dann axial auf den Kolben unter gleichzeitiger plastischer Aufweitung aufgezogen wird, bis er die vorgesehene, axiale Endstellung erreicht hat, und daß er anschließend radial nach innen gestaucht wird. Dabei sollte der Gleitring unter spanabhebender Bearbeitung aus einem zuvor von einem PTFE-Rohr abgeschnittenen Rohling geformt sein.

Bei dem erfindungsgemäßen Verfahren wird der dem PTFE-Material eigene Memory-Effekt genutzt. Hierzu wird der Gleitring in endloser Form hergestellt, und zwar derart, daß sein Innendurchmesser kleiner ist als der der zugehörigen Anlageringfläche am Kolben. Anschließend wird der Gleitring beim Überziehen über den Kolben mittels eines Kalibrierwerkzeuges derart gedehnt, daß er über die die Nut begrenzenden Randstege bzw. über den ringförmigen Vorsprung herübergeschoben werden kann. Dann wird der Gleitring beispielsweise mittels eines Preßrings radial gestaucht. Dies initiiert den Memory-Effekt und hat zur Folge, daß der Gleitring nach der Stauchbehandlung bestrebt ist, wieder seine ursprüngliche Form anzunehmen, sich also mit starker, radial nach innen gerichteter Schrumpfspannung an der vorgesehenen Anlageringfläche anlegt. Hierdurch erhält der Gleitring den gewünschten, unverrückbaren Halt.

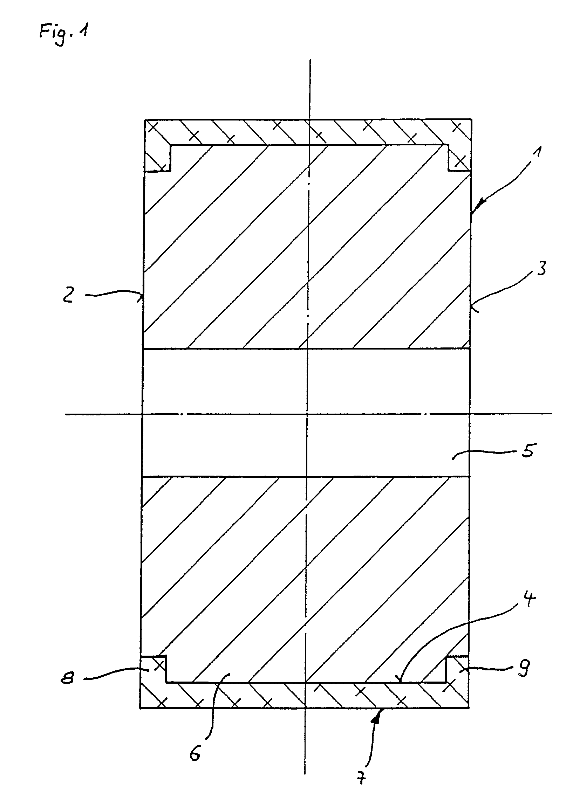

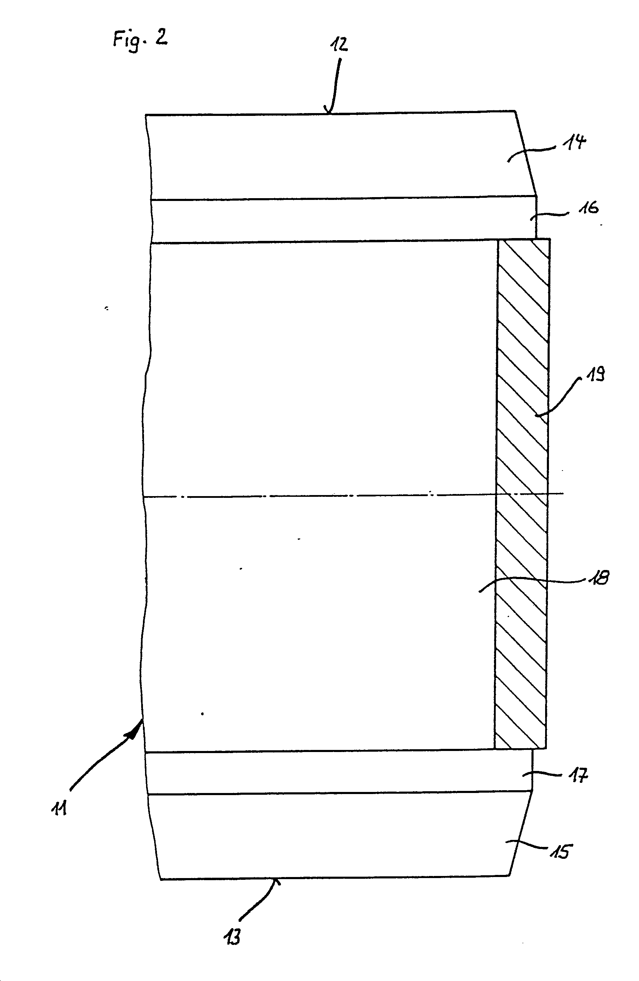

In der Zeichnung ist die Erfindung an Hand von Ausführungsbeispielen näher veranschaulicht. Es zeigen:

Figur (1) einen Axialschnitt durch einen Kolben mit über einem Vorsprung gestülpten Gleitring;

Figur (2) einen Axialschnitt durch einen anderen Kolben mit einem in eine Nut eingelegten Gleitring.

Figur (1) zeigt in einem Axialschnitt enen Kolben (1), der für einen Teleskopzylinder bestimmt und dort für eine axial verschiebliche Lagering in einem Zylinderrohr vorgesehen ist. Er hat plane Vorder- und Rückseiten (2, 3) und eine zylindrische Umfangsfläche (4). In der Mitte weist er ein sich in axialer Richtung erstreckendes Durchgangsloch (5) auf, in das das Ende einer Kolbenstange eingesteckt und diese mit dem Kolben (1) befestigt werden kann.

Die Umfangsfläche (4) ist derart gestuft, daß sich ein zylindrischer Vorsprung (6) ergibt, der sich über die gesamte Umfangsfläche (4) erstreckt. Über diesen Vorsprung ist ein Gleitring (7) gestülpt, der im gezeigten Querschnitt eine U-Form mit an beiden Stirnseiten nach innen gerichteten Randstegen (8, 9) hat. Die Randstege (8, 9) liegen an den Stirnseiten des Vorsprungs (6) an und halten den Gleitring (7) axial unverrückbar auf dem Vorsprung (6) fest.

Der Gleitring (6) ist aus einem PTFE-Material mit 25% Kohlebeimengung gefertigt. Selbstverständlich können dem PTFE-Material auch andere Stoffe beigemengt worden sein. Er ist zunächst so gefertigt, daß er radiales Untermaß hat, d. h. sein Durchmesser ist zunächst geringer als der der entsprechenden Abschnitte der Umfangsfläche (4). Zum Überstülpen wird der Gleitring (7) entsprechend mittels eines Kalibrierwerkzeuges aufgeweitet, damit er über den Vorsprung geschoben werden kann. Nach dem Überstülpen wird der Gleitring (7) mit einem Preßring wieder komprimiert. Durch diese Stauchung wird ein Memory-Effekt des PTFE-Materials initiiert, so daß der Gleitring (7) bestrebt ist, wieder in seine ursprüngliche Form zu schrumpfen, und er legt sich auf diese Weise mit radial nach innen gerichteter Vorspannung an die Umfangsfläche (4) an. Hierdurch erhält der Gleitring (7) einen festen Halt auf dem Kolben (1). Er zeichnet sich durch hohe Formbeständigkeit, geringe Reibwerte, Beständigkeit gegen chemische Einflüsse sowie durch Temperaturfestigkeit aus.

Figur (2) zeigt in einem Axialschnitt einen Kolben (11), der für einen Teleskopzylinder bestimmt und dort für eine axial verschiebliche Lagerung in einem Zylinderrohr vorgesehen ist. Er hat plane Vorder- und Rückseiten (12, 13), an die sich jeweils geneigte Kegelstumpfflächen (14, 15) anschließen. Diese gehen in Randstege (16, 17) über, die eine flache und breite Nut (18) begrenzen.

In die Nut (18) ist ein Gleitring (19) - hier im Schnitt dargestellt - eingesetzt. Er ist aus einem PTFE-Material mit 25% Kohlebeimengung gefertigt. Selbstverständlich können dem PTFE-Material auch andere Stoffe zugegeben worden sein.

Der Gleitring (19) ist als endloser Ring gefertigt. Dabei hat er zunächst ein radiales Untermaß, d.h. sein Innendurchmesser ist zunächst geringer als der Innendurchmesser der Nut (18). Damit der Gleitring (19) über die Randstege (16, 17) geschoben werden kann, wird er mittels eines Kalibrierwerkzeugs aufgeweitet. Befindet er sich dann in der Nut (18), wird er mit einem Preßring wieder gestaucht, d.h. nach innen komprimmiert. Durch diese Stauchung wird ein Memory-Effekt des PTFE-Materials initiiert, so daß der Gleitring (19) bestrebt ist, wieder in seine ursprüngliche Form zu schrumpfen. Dies hat zur Folge, daß er sich mit radial nach innen gerichteter Vorspannung an die Wandung der Nut (18) anlegt. Hierdurch erhält der Gleitring (19) einen festen Halt auf dem Kolben (11).

**Ansprüche**

1. Teleskopierende Vorrichtung, insbesondere Stoßdämpfer, mit einem Zylinderrohr und einem darin axial verschieblichen Kolben, auf dessen Umfangsfläche ein Gleitring aus einem PTFE-Material angeordnet ist, der an Absätzen zur Verhinderung einer Axialbewegung anliegt und mit der Innenwandung des Zylinderrohrs in Berührung steht, dadurch gekennzeichnet, daß der Gleitring (7, 19) endlos ausgebildet ist und den Kolben (1, 11) mit radialer Schrumpfspannung umfaßt.

2. Vorrichtung nach Anspruch 1, dadurch gekennzeichnet, daß die Absätze von wenigstens einem ringförmigen Vorsprung (6) gebildet sind, den der Gleitring (7) formschlüssig umfaßt.

3. Vorrichtung nach Anspruch 2, dadurch gekennzeichnet, daß der Vorsprung (6) als zylindrischer Kolbenabschnitt ausgebildet ist und der Gleitring (7) U-Form mit nach innen gerichteten Randstegen hat.

4. Vorrichtung nach Anspruch 3, dadurch gekennzeichnet, daß der Gleitring (7) eine Dicke von 0,5 bis 1 mm hat.

5. Vorrichtung nach Anspruch 3 oder 4, dadurch gekennzeichnet, daß der Kolbenabschnitt (7) mindestens 0,8 mm vorsteht.

6. Vorrichtung nach einem der Ansprüche 2 bis 5, dadurch gekennzeichnet, daß der Kolben (1) aus Sintermetall besteht.

7. Vorrichtung nach Anspruch 1, dadurch gekennzeichnet, daß die Absätze Teil einer Nut (18) sind, in die der Gleitring (19) eingepaßt ist.

8. Verfahren zur Herstellung einer teleskopierenden Vorrichtung nach einem der Ansprüche 1 bis 7, bei dem ein Gleitring aus PTFE geformt und um den Kolben unter Anlage an Absätzen gelegt wird, dadurch gekennzeichnet, daß ein endloser Gleitring (7, 19) geformt wird, dessen Innendurchmesser zumindest in einem Teilbereich kleiner ist als der der zugehörigen Anlageringfläche am Kolben (1, 11), daß der Gleitring (7, 19) dann axial auf den Kolben (1, 11) unter gleichzeitiger plastischer Aufweitung aufgezogen wird, bis er die vorgesehene, axiale Endstellung erreicht hat, und daß er anschließend radial nach innen gestaucht wird.

9. Verfahren nach Anspruch 8, dadurch gekennzeichnet, daß der Gleitring (7, 19) unter spanabhebender Bearbeitung aus einem zuvor aus einem PTFE-Rohr abgeschnittenen Rohling geformt wird.

Fig. 1

Fig. 2